# EUROPEAN PATENT SPECIFICATION

(11) **EP 1 234 463 B1**
(45) Date of publication and mention of the grant of the patent: **08.04.2009**
(21) Application number: 00971553.3
(22) Date of filing: 23.10.2000
(51) Int. Cl.: H04W 48/16

(54) **METHOD OF UPDATING A CONTROL CHANNEL LIST IN MOBILE COMMUNICATIONS SYSTEM**
VERFAHREN ZUR AKTUALISIERUNG EINER KONTROLKANALSLISTE IN EINEM MOBILKOMMUNIKATIONSSYSTEM
PROCEDE DE MISE A JOUR DE LISTE DE CANAUX DE COMMANDE DANS UN SYSTEME DE COMMUNICATIONS MOBILES

(30) Priority: 25.10.1999 GB 9925234
(43) Date of publication of application: 28.08.2002
(60) Divisional application: 09002066.0
(73) Proprietor: Sepura plc, Cambridge CB4 1GR (GB)
(72) Inventor: RAYNE, Mark, Wentworth, Cambridgeshire CB6 3ND (GB); McMAHON, Paul, Cambridge CB3 7QQ (GB)
(74) Representative: Tothill, John Paul
(86) International application number: PCT/GB2000/004080
(87) International publication number: WO 2001/033881

(56) References cited:
- EP-A- 0 522 885
- EP-A- 0 948 226
- WO-A-93/23963
- WO-A-97/36449
- US-A- 5 794 147

## Description

The present invention relates to mobile radio communications systems and in particular to a method of and an apparatus for enabling a mobile radio unit of a mobile radio communications system to find and acquire a radio channel for communicating with a base station of the mobile radio communications system.

As is known in the art, for a mobile radio unit of a mobile radio communications system to be able to communicate with the fixed radio network (and thereby operate in the radio system), the mobile radio unit must be tuned to a radio channel of a base station of the mobile radio system. This means that whenever a mobile radio unit first becomes active, or migrates into a new area, it must, before it can communicate with the radio system, identify and synchronise to a suitable base station radio channel.

Similarly, if it is necessary for a mobile radio unit to be handed over from a first base station to a second base station during an on-going call, the mobile radio unit must be able to identify and synchronise to a radio channel of the new base station.

To minimise any interruption in communication when a mobile radio unit needs to find the new base station, it is desirable for the mobile radio unit to be able to recognise and synchronise to the new base station radio channel as quickly as possible, particularly during a handover (as handover desirably occurs with the minimum possible interruption in communication).

To facilitate the identification of and subsequent synchronisation to a suitable base radio station channel, mobile radio units will typically, as is known in the art, store a list of radio frequencies used by base stations of the radio system, and, when it is necessary to find a new radio channel, tune in turn to each frequency in the stored list and attempt to synchronise on each frequency until a suitable radio channel is found.

The channel synchronisation search typically comprises the mobile radio unit listening on the particular frequency for a limited period of time to try to detect special synchronisation signalling which should be present on the frequency if it is available and suitable for the mobile radio unit to use. If the mobile radio unit does not detect the synchronisation signalling during the waiting time period, the mobile radio unit will turn to another frequency on its list, and so on, until it succeeds in synchronising on a frequency with a suitable signal.

However, in many mobile radio systems, the synchronisation signals may only be broadcast at intervals. For example, synchronisation signals are broadcast at intervals of 235 ms in the GSM (Global System for Mobile communications) system. In the TETRA (TErrestrial Trunked RAdio) system, synchronisation signals may only be broadcast at intervals of up to 4 seconds.

The search waiting time period on each frequency must therefore be at least the expected interval between synchronisation signals to allow sufficient time for a synchronisation signal to be received, before trying another frequency. In practice, the waiting time will often be longer than a single synchronisation signal interval, as typically, sufficient time to receive two or three synchronisation signals is allowed on each frequency in order to, for example, reduce the effects of fading causing suitable synchronisation signals to be improperly received.

Thus, for example, to identify and synchronise on a good TETRA signal could take well over 1 minute if the mobile radio unit has just been switched on in a new area and it has a list of, for example, sixty possible frequencies to search. Such delay in channel acquisition is undesirable, as it increases the interruption in communications when a new radio channel is required.

It is known therefore to modify the base station radio channel search process to try to reduce the possible delay in identifying and synchronising to a new base station radio channel.

For example, in some radio systems, including the TETRA system, the frequencies used by adjacent base stations may be broadcast to mobile radio units, so that the number of frequencies to be searched for a suitable radio signal when moving to an adjacent area can be reduced. However, even in that case, having to pause on each possible frequency for several seconds from even a reduced search list can still mean that it takes up to a minute to find a strong signal and synchronise to it.

Another common method of speeding up the scanning of potential frequencies in the frequency list is to tune to each of the frequencies for a relatively short period of time to measure the signal level on the frequency (but not necessarily long enough to receive a synchronisation signal). The mobile radio unit then records the signal level and moves on to the next frequency to be inspected. This process is typically repeated several times, as is known in the art, to build up a set of spaced signal level measurements for each frequency, which measurements are then, for example, averaged to give an overall signal level estimate for the frequency. When the mobile radio unit has been through its list of candidate frequencies a sufficient number of times, it ranks them in order of signal level and, starting with the frequency having the highest measured signal level, returns to the frequencies to listen for a longer period of time for synchronisation signals on each frequency in turn until it achieves synchronisation.

This technique helps to reduce the radio channel acquisition time. However, the Applicants have recognised that it can still have problems. For example, frequencies on which there are strong interfering signals with relatively high signal levels will still tend to be placed at the top of the revised list of frequencies to be examined in detail following the initial faster frequency scan, even if those frequencies could in practice be unusable. Thus a mobile radio unit may still waste time trying to obtain synchronisation on an inappropriate signal before working on down its list to choose a compatible base station radio channel.

EP-A-0522885 describes a mobile communications system in which there are no dedicated control channels and a mobile unit, before entering into a standby mode, scans a plurality of channels for determining an assigned control channel which is specified by the presence of a frequency shift keying subcarrier component therein. The mobile unit selects one of the plurality of channels assigned to the system and detects a signal strength of the selected channel and also detects the frequency shift keying subcarrier. If the signal strength exceeds a reference level and simultaneously the frequency shift-keying component is detected, the presence of an assigned control channel is indicated and the mobile unit terminates the channel scanning.

According to a first aspect of the present invention, there is provided a method of operating a mobile radio unit of a mobile radio communications system, in which radio system the mobile radio unit stores a list of target frequencies to scan for a suitable frequency for communicating with a base station of the radio system, the method comprising:
the mobile radio unit scanning each frequency in its list, and determining for each frequency the signal level of the signal on that frequency, and assessing for each frequency whether the signal on that frequency has a particular characteristic of the radio system;
the mobile radio unit then determining a revised frequency order on the basis of the determined signal levels and the characteristic assessments for each frequency; and
the mobile radio unit then attempting to synchronise to the frequencies in the revised frequency order in the order of the revised frequency order.

According to a second aspect of the present invention, there is provided a mobile radio unit for use in a mobile radio communications system, in which system plural frequencies are used for radio communications, the mobile radio unit comprising:
means for storing a list of frequencies used by the radio system;
means for scanning each frequency in the stored list;
means for determining for each scanned frequency the signal level of the signal on that frequency;
means for assessing for each scanned frequency whether the signal on that frequency has a particular characteristic of the radio system;
means for determining a revised frequency order based on the determined signal levels of each frequency and the assessments of whether each frequency has the particular characteristic of the radio system; and
means for attempting to synchronise to the frequencies in the revised frequency order in the order of the revised frequency order.

In the present invention, as in the known frequency searching techniques, an initial scan of the frequency list stored by the mobile radio unit is carried out, but as well as determining the signal level of each frequency during the initial scan, an assessment of whether the signal on the particular frequency has a particular characteristic of the radio system is also made. The signal level and characteristic assessment results are then used together to derive a revised order in which to scan the frequencies for synchronisation signals.

The Applicants have recognised that many radio systems will have characteristic properties to their signals that can be relatively rapidly identified and will distinguish them from signals of other radio systems. Thus assessing whether the signal on each frequency has the relevant particular characteristic gives an assessment of the likelihood of the signal on that frequency being from the correct radio system. The assessment of whether the signal has the relevant particular characteristic can also give a measure of how 'useful' the signal is likely to be, since, if the signal shows the relevant signal characteristic strongly, that would suggest that the signal is valid and useful.

Thus the assessment of whether the signal has the relevant particular characteristic can be used to place signals more likely to be from the correct radio system and more likely to be useable towards the top of the revised frequency list for the synchronisation scan so as to reduce the possibility of trying to synchronise to an alien or incompatible signal before more suitable signals are considered.

Thus the present invention provides a refined process for selecting those signals (i.e. frequencies) to attempt to synchronise to first, which can be used to improve the order in which the frequencies are scanned for synchronisation to scan what appear to be more suitable signals first and thereby to reduce the possibility of wasting time trying to synchronise on incompatible signals and to improve the speed at which a new suitable frequency (and therefore base station) is acquired.

The initial faster frequency scan can be carried out as desired. For example, the mobile radio unit could pause once on each frequency in its list in turn to carry out the signal assessment. However, the initial scan is preferably carried out by the mobile unit carrying out plural measurements at spaced intervals on each frequency, preferably by returning to each frequency to be scanned at spaced intervals during the initial scan, e.g. such that an assessment is carried out on each frequency in turn and the cycle of measurements over the different frequencies is repeated several (i.e. two or more) times. This method ensures that successively assessed signal samples on the same frequency are relatively well-spaced in time, thereby providing better averaging of the measurements, and helping to ensure that not all measurements on a frequency are made during the same fade (unless the receiver is stationary).

The frequency list to be scanned could be the list of all frequencies used by the radio system, or it could be a reduced list, for example of only those frequencies known to be in use in the particular area, or in adjacent cells, as is known in the art.

The signal level for each frequency can be estimated as desired and in any suitable manner known in the art.

The characteristic of the radio system for which the signals are assessed can be selected as desired. It should be a characteristic of the system that can be used to distinguish it from other radio systems. It should also not take too long to assess and preferably can be assessed in the same time that it takes to determine the signal level, i.e. such that the characteristic assessment does not extend the duration of the initial faster frequency scan. More than one characteristic can be considered if desired.
Preferably, the characteristic of the signal is assessed, and the observed signal characteristics are then compared with the expected characteristics for the radio system, e.g. to see how well they correspond, to assess whether the signal has the required characteristic.

In a particularly preferred embodiment, the signal characteristic assessment comprises assessing whether the signal has a characteristic of the radio modulation scheme used in the radio system. The Applicants have recognised that many radio systems use particular radio modulation schemes which modulation schemes have particular characteristics that can be assessed relatively quickly. Thus considering the modulation of the signal can give a good assessment of its suitability.

For example, in the TETRA system, π/4 DQPSK (π/4 Differential Quaternary Phase-Shift Keying) modulation is employed. This form of modulation has the particular characteristic that there is a +/- π/4 or +/- 3π/4 radians phase shift between each transmitted symbol (there is never a phase shift of zero radians). The GSM system, on the other hand, uses GMSK (Gaussian Minimum Shift Keying) modulation, which employs phase shifts of +/- π/2 radians relative to a steady RF (radio frequency) carrier. In this case a phase shift of zero is permitted, so a characteristic of GMSK modulation is the presence of phase shifts of either zero radians or n radians between successive symbols (more specifically a +π is always followed by either 0 or -π, and no +π may follow +π and any subsequent 0's until a -π has occurred; a -π is always followed by either 0 or +π, and no -π may follow -π and any subsequent 0's until a +π has occurred). Other modulation schemes (such as 16QAM) have other characteristics which can be detected in an appropriate manner. For example, a four-level FM modulation scheme will exhibit FM modulation with transitions between four different modulating frequencies, and so will show characteristic frequency shifts.

Thus in a particularly preferred embodiment, the assessment of whether the signal on a particular frequency has the particular characteristic of the radio system comprises an assessment of whether the signal exhibits the particular phase or frequency shift characteristics of the radio system's modulation scheme. This could be assessed by analysing the phase or frequency shifts between successive selected samples or portions, e.g. symbols, in the signal on the frequency and comparing the observed phase or frequency shifts with the expected phase or frequency shifts for the wanted modulation scheme, e.g. to see how well they correspond, to assess whether the signal carries the required form of modulation.

The analysis of the phase or frequency shifts can be carried out as desired and should be carried out at the same time as the signal level determination is carried out. Thus, in a TETRA system, for example, during the, say, 5 ms used to measure and average the signal level, the phase shifts between each successive symbol received during that period could be measured. Similarly where a frequency is assessed several times in the initial scan, by, e.g. measuring the signal level and modulation characteristics for a shorter time, e.g. 1 ms, and then changing frequency and repeating the cycle, e.g. 5 times and averaging the five measurements, the phase shifts between each successive symbol received during each scanning period could be measured. In the TETRA system, each symbol has a duration of 56 microseconds, so in the TETRA system up to 90 symbol phase shifts could be examined in the 5 ms period (or up to 18 in a 1 ms period).

The measured phase or frequency shifts can be used as desired to assess whether the signal has the particular characteristic. For example, the actual values of the phase shifts could be considered. The assessment could, for example, comprise looking at whether appropriate values and/or sequences of phase or frequency shifts are observed.

For example, if a TETRA signal was being sought, but random phase shifts are detected, then that would indicate a very poor TETRA signal. If phase shifts close to 0 or π/2 were prevalent, that would indicate a strong interfering signal using a different modulation scheme.

In another arrangement the measured phase shifts for the symbols could be mapped to a common (e.g. the first) quadrant (i.e. have their modulation induced phase differences removed) to obtain a mean phase shift value and that value compared with the expected value for the modulation scheme used by the radio system. The variation in the values could also be considered.

In a particularly preferred embodiment, the assessment of whether or not the scanned signal has the particular characteristic comprises allocating a probability that the signal has that characteristic based on the assessment of the signal. Preferably three levels of relative probability, low, medium and high, are used. Thus preferably the fit of the candidate signal to the desired characteristic is measured on a probability scale and the probability of a match, e.g. the probability that it carries the required form of modulation, recorded. For example, the deviation of the mean phase or frequency shift from the expected value if the signal were to carry the correct form of modulation and/or the proportion of measured phase or frequency shift values having the value of the wanted modulation scheme, could be used to classify how likely the signal is to be from the correct radio system.

The reordering of the list of frequencies after the initial faster scan has been completed can be carried out as desired, based on the determined signal levels and radio system characteristic assessments.

The Applicants have recognised that a valid but weak signal will tend to exhibit a low to medium probability of being valid for the radio system (since weak signals will tend to suffer from much multipath distortion and this will introduce errors into the signal), but a higher signal level, valid signal, will have a higher probability. On the other hand, a strong signal showing a low probability of being valid can reasonably be rejected.

Thus in a particularly preferred embodiment the frequencies having signals having a high probability of being valid (i.e. assessed to be likely to have the particular characteristic) are considered first, preferably in signal level order (highest first), and so on, with the signals having the lowest probability of being valid being considered last. In such an arrangement, the mobile radio unit will attempt to synchronise to signals having a higher signal level and a good assessment that they have the particular characteristic first, and only after synchronisation to those signals has failed will the mobile radio unit then attempt to synchronise on signals assessed to have a lower probability of being valid.

The revised frequency order which is used for the synchronisation scan can include all the frequencies in the initial faster frequency scan list, but this is not essential and it could include less frequencies. For example, in a preferred embodiment, signals found to have an undesirably low signal level are not included in the synchronisation scan. This can be achieved by using a threshold signal level to eliminate signals of undesirably low signal level from the synchronisation scan. Similarly, signals having less than a given probability of having the correct radio system characteristic could be eliminated from and not included in the revised synchronisation scan frequency order list.

The synchronisation scan should typically be stopped once the mobile unit finds a suitable frequency to synchronise to. If the mobile unit scans all the frequencies in the revised frequency order list in turn without finding a suitable signal, it could stop its synchronisation scan then (and, for example, inform the user accordingly), or, for example, repeat the scan (for, e.g., up to a predetermined number of times) before finally determining that synchronisation is not possible.

In a particularly preferred embodiment of the present invention, during the synchronisation scan when the mobile radio unit is waiting for a synchronisation signal and attempting to synchronise to each frequency, the mobile radio unit preferably also carries out an assessment of whether the signal it is attempting to synchronise to does have the particular characteristic of the radio system, i.e. does belong to its radio system, and interrupts and aborts its wait and synchronisation attempt on that frequency, and switches onto the next frequency in its list, if it determines that the signal does not have the particular characteristics (i.e. does not belong to its radio system), e.g. it determines that there is greater than a particular probability that the signal does not have the particular characteristic. This allows the radio unit to abort earlier a synchronisation attempt on an unsuitable frequency. This arrangement may be advantageous, because the pause on a given frequency when attempting to synchronise is longer than the time taken to assess each signal during the initial faster frequency scan, and thus a more reliable signal characteristic assessment may be able to be made, as, e.g. the mobile radio unit will have longer to integrate the phase shifts between symbols, than during the initial faster frequency scan.

The methods in accordance with the present invention may be implemented at least partially using software e.g. computer programs. It will thus be seen that when viewed from a further aspect the present invention provides computer software specifically adapted to carry out the methods hereinabove described when installed on data processing means, and a computer program element comprising computer software code portions for performing the methods hereinabove described when installed on data processing means. The invention also extends to a computer software carrier comprising such software which when used to operate a mobile radio unit or a radio system comprising a digital computer causes in conjunction with said computer said radio unit or system to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software.

A number of preferred embodiments of the present invention will now be described by way of example only.

The embodiments will be described with reference to the TETRA system, although as will be appreciated from the above, the invention is also applicable to other mobile radio communications systems, such as the GSM system.

An example of the operation of a mobile radio unit in accordance with the present invention when it is first switched on (i.e. of cold synchronisation) will now be considered.

For this example, we will suppose that the mobile radio unit stores a list of 60 frequencies where it can expect to find system synchronization signals, and requires 5 ms to tune its synthesizer to one of these frequencies, and a further 5 ms to measure the signal level on that frequency. We will further suppose that considering the TETRA specification, base stations of the radio system transmit synchronization bursts (signals) at 1 second intervals on their particular frequency, but that each synchronisation burst is in a different one of the 4 TETRA timeslots, so that it takes 4 seconds for a synchronization burst to be repeated on a particular timeslot.

When the mobile radio unit has just been switched on, its first task is to locate a TETRA radio system as quickly as possible. In the basic prior art system discussed above, the mobile unit would tune to each frequency in its stored list in turn and monitor each frequency for a minimum of 1 second, to be sure of listening at the time a base station would be transmitting a synchronization burst. The search time for the 60 frequencies will be of the order of 1 minute (but there is a 1 in 1080 chance that the search time will be only 15 ms and a 1 in 60 chance that the search time will be 1 second).

Now consider a more sophisticated mobile radio unit, operating the prior art technique of initially scanning all 60 channels in its list to build up a table of signal levels before attempting synchronisation. A fast scan duration of 5 seconds (which is a typical time selected for such a frequency scan, being a reasonable compromise between the need to sample signals over as great a distance as possible to help ensure sample de-correlation and the desire not to "waste" too much time doing the scan) will be assumed. At 5 ms tuning time and 5 ms signal level measurement time, this fast scan duration will give 8 spaced signal samples per frequency, which is a reasonable number. Having ordered the frequencies in order of signal level the mobile radio unit then returns to each frequency in the revised order to attempt synchronisation on that frequency. In the absence of interfering signals it should be able to synchronize after a further 1 second. Thus in this case the maximum time to synchronize should be 6 seconds (5 seconds to scan plus 1 second to synchronise), but there is a 1 in 18 chance of synchronizing in 5.015 seconds. It would not be possible to synchronize from cold faster than this.

However, as discussed previously, interfering signals will reduce the benefits of this method of searching. The interference could be accidental (e.g. vehicle ignition pulses or a nearby desktop or laptop computer), or it could be intentional transmissions from another system using a different modulation scheme. The latter is a potential problem for TETRA systems, which share frequencies with military users.

In the case where the two strongest signals turn out to be interference, the mobile radio unit in this example would still attempt to synchronise to those unsuitable signals first, thereby introducing a further delay of 8 seconds (it taking 4 seconds to reject each interference frequency). In this case the cold synchronization time would be at least 13.015 seconds (5 seconds to scan, 8 seconds to reject the two interference frequencies and 0.015 seconds to synchronise to the third frequency tested), but more probably 14 seconds.

Now consider a mobile radio unit which employs the method of the present invention. It first performs a fast frequency scan in which it dwells on each frequency (at several spaced intervals) for 5 ms to record the average signal level, and at the same time records the digital samples received by its demodulator and using a digital signal processor, examines the recorded digital samples, looking for evidence of π/4 and 3π/4, but never zero, phase shifts at the expected symbol rate. The probability that this has been detected is stored with the averaged signal level. (This can be done while the mobile radio unit is tuning to the next frequency in the list.) This fast frequency scan would again, as discussed above, typically be arranged to be carried out over a period of the order of 5 seconds to try to ensure sufficient spaced samples for each frequency. After this initial "fast" frequency scan, the scanned frequencies are then ordered according to their averaged signal levels and the probability that their signal has the required particular modulation characteristics, to provide a revised scanning order list of the frequencies in the list.

In this case, if the two strongest signals are again interference, those frequencies will have strong signal levels, but low probabilities of having the particular modulation characteristic. Thus when the mobile radio unit has completed its fast scan, it will place those two strongest signals low in its revised frequency scanning order as they are recorded as having a low probability of bearing TETRA modulation. Instead, the mobile radio unit will tune straight to the third strongest signal, which, for example, has been recorded as having a medium or high probability of carrying TETRA modulation. Thus the mobile unit's cold synchronization delay would remain in the region of 5.015 to 6 seconds (i.e. 5 seconds to scan and 1 second to synchronise).

We will now consider what happens when a mobile radio unit needs to identify a new base station for handover, i.e. while it is engaged in a call.

In the first, basic prior art technique, discussed above, the mobile radio unit has to listen for each potential new base station in turn. The base stations' TDMA frame structures in TETRA are not synchronized, so in order to find a synchronization burst on an adjacent cell, the mobile station retunes its synthesizer between reception slots. This allows it to look for approximately two time slots for a possible synchronization burst on an adjacent cell before having to retune back to the serving cell frequency, and this can be done in each frame.

As the synchronization bursts cycle through the time slots the mobile radio unit will have to wait up to 4 seconds to ensure that a synchronization opportunity has occurred, before choosing a new frequency. At this rate, the mobile radio unit could take up to 4 minutes to synchronize to a new base station, by which time the call would most probably have been lost, even if the frequencies of the six adjacent cells had been broadcast to allow a reduced frequency list to be searched.

The more sophisticated prior art mobile radio unit of the previous example could attempt to keep its table of signal strengths always up to date. It might even attempt to store synchronization data on the best alternative base station, so that handover can be achieved without any searching delays. However, suppose that for some reason the signal strength table needs to be renewed (as could happen if the mobile radio unit has rounded a bend in a high-sided valley, or entered a new street in a high rise urban environment). As before, the mobile radio unit performs its fast scan of signal levels in 5 s, and then searches each entry in the list in sequence. Considering again the case where the two strongest signals are in fact interference, the mobile radio unit would have to pause on the unsuitable first 2 frequencies for at least 4 seconds each as before (or 8 seconds each, if giving the receiver 'two bites at the cherry' as is usual, to reduce the effects of fading). After pausing a further 4 (or 8) seconds on the third frequency in the list, it achieves synchronization, after a delay of between 13 and 17 seconds (or 21 and 29 seconds in a faded channel). The call might have been lost during this interval.

If the mobile radio unit employs the method of the present invention, it will in this case rank the two strongest signals quite low, as shown in the previous example, and attempt to synchronize to the third strongest signal (i.e. the strongest signal showing a high probability of having the right modulation scheme). The synchronization delay is now reduced to between 5 and 9 seconds (or 13 seconds in a faded channel).

It can be seen from the above that the mobile radio unit operating in accordance with the present invention uses both the signal level and radio system characteristics derived during the initial faster frequency scan when deciding which frequencies to attempt to synchronise to. It in effect supplements the signal level information determined during the initial faster frequency scan with data indicating the probability that the corresponding signal is useful. This improves the ranking of the signals to then attempt to synchronise to, and thus reduces the probability of wasting time trying to synchronise on incompatible signals.

## Claims

1. A method of operating a mobile radio unit of a mobile radio communications system, in which radio system the mobile radio unit stores a list of target frequencies to scan for a suitable frequency for communicating with a base station of the radio system, the method comprising:
the mobile radio unit scanning each frequency in its list, and determining for each frequency the signal level of the signal on that frequency, and assessing for each frequency whether the signal on that frequency has a particular characteristic of the radio system;
the mobile radio unit then determining a revised frequency order on the basis of the determined signal levels and the characteristic assessments for each frequency; and
the mobile radio unit then attempting to synchronise to the frequencies in the revised frequency order in the order of the revised frequency order.

2. The method of claim 1, wherein the initial scan of each frequency in the list comprises the mobile unit taking signal samples at spaced intervals on each frequency.

3. The method of claim 1 or 2, wherein the signal characteristic assessment comprises assessing whether the signal has a characteristic of the radio modulation scheme used in the radio system.

4. The method of claim 3, wherein the signal characteristic assessment comprises assessing whether the signal exhibits particular phase or frequency shift characteristics of the radio system's modulation scheme.

5. The method of claim 4, wherein the step of assessing whether the signal exhibits particular phase or frequency shift characteristics of the radio system's modulation scheme comprises analysing the phase or frequency shifts between successive selected samples or portions in the signal on the frequency and comparing the observed phase or frequency shifts with the expected phase or frequency shifts for the wanted modulation scheme.

6. The method of claim 4 or 5, comprising using the deviation of the mean observed phase or frequency shift for the signal being assessed from the expected value if the signal were to carry the correct form of modulation and/or using the proportion of observed phase or frequency shift values having the value of the wanted modulation scheme, to classify how likely the signal is to be from the correct radio system.

7. The method of any one of the preceding claims, wherein the assessment of whether or not the scanned signal has the particular characteristic comprises allocating a probability that the signal has that characteristic based on the assessment of the signal.

8. The method of any one of the preceding claims, wherein the revised frequency order is determined such that frequencies having signals assessed to be most likely to have the particular characteristic are attempted to be synchronised to first, and the signals assessed to be least likely to have the particular characteristic are attempted to be synchronised to last.

9. The method of claim 8, wherein the revised frequency order is further arranged in signal level order.

10. The method of any one of the preceding claims, further comprising eliminating signals having a signal level less than a threshold signal level from the revised frequency order.

11. The method of any one of the preceding claims, comprising: the mobile radio unit, during the synchronisation scan when the mobile radio unit is attempting to synchronise to each frequency and is waiting for a synchronisation signal, carrying out an assessment of whether the signal it is attempting to synchronise to does have the particular characteristic of the radio system, and interrupting and aborting its wait and synchronisation attempt on that frequency, and switching onto the next frequency in the list, if it determines that the signal does not have the particular characteristic.

12. A mobile radio unit for use in a mobile radio communications system, in which system plural frequencies are used for radio communications, the mobile radio unit comprising:
means for storing a list of frequencies used by the radio system;
means for scanning each frequency in the stored list;
means for determining for each scanned frequency the signal level of the signal on that frequency;
means for assessing for each scanned frequency whether the signal on that frequency has a particular characteristic of the radio system;
means for determining a revised frequency order based on the determined signal levels of each frequency and the assessments of whether each frequency has the particular characteristic of the radio system; and
means for attempting to synchronise to the frequencies in the revised frequency order in the order of the revised frequency order.

13. The mobile unit of claim 12, wherein the signal characteristic assessment means comprises means for assessing whether the signal has a characteristic of the radio modulation scheme used in the radio system.

14. The mobile unit of claim 13, wherein the signal characteristic assessment means comprises means for assessing whether the signal exhibits particular phase or frequency shift characteristics of the radio system's modulation scheme.

15. The mobile unit of claim 14, comprising means for classifying how likely the signal is to be from the correct radio system on the basis of the deviation of the mean observed phase or frequency shift for the signal being assessed from the expected value if the signal were to carry the correct form of modulation and/or on the basis of the proportion of measured phase or frequency shift values having the value of the wanted modulation scheme.

16. The mobile unit of any one of claims 12 to 15, wherein the revised frequency order determining means is arranged to determine the revised frequency order such that frequencies having signals assessed to be most likely to have the particular characteristic are attempted to be synchronised to first, and signals assessed to be least likely to have the particular characteristic are attempted to be synchronised to last.

17. The mobile unit of claim 16, wherein the revised frequency order determining means is further arranged to determine the revised frequency order in signal level order.

18. The mobile unit of any one of claims 12 to 17, wherein the revised frequency order determining means is arranged to eliminate signals having a signal level less than a threshold signal level from the revised frequency order.

19. The mobile unit of any one of claims 12 to 18, comprising
means for, during the synchronisation scan when the mobile radio unit is attempting to synchronise to each frequency, while the mobile unit is waiting for synchronisation signals, assessing whether the signal it is attempting to synchronise to does have the particular characteristic of the radio system; and
means for interrupting and aborting the wait and synchronisation attempt on that frequency, and for switching onto the next frequency in the list, if it is determined that the signal does not have the particular characteristic.

20. A computer program element comprising computer software code portions for performing the method of any one of claims 1 to 11 when installed on data processing means.

## Patentansprüche

1. Verfahren zum Betrieb einer Mobilfunkeinheit eines Mobilfunk-Kommunikationssystems, wobei in dem Funksystem die Mobilfunkeinheit eine Liste von Zielfrequenzen zum Scannen nach einer geeigneten Frequenz für die Kommunikation mit einer Basisstation des Funksystem speichert, wobei das Verfahren die folgenden Schritte umfaßt:
Die Mobilfunkeinheit scannt jede Frequenz in ihrer Liste und bestimmt für jede Frequenz den Signalpegel des Signals auf dieser Frequenz und beurteilt für jede Frequenz, ob das Signal auf dieser Frequenz eine bestimmte charakteristische Eigenschaft des Funksystems aufweist;
die Mobilfunkeinheit bestimmt dann eine revidierte Frequenzreihenfolge auf der Basis der bestimmten Signalpegel und der charakteristischen Beurteilung für jede Frequenz; und
die Mobilfunkeinheit versucht dann in der Reihenfolge der revidierten Frequenzreihenfolge, sich mit den Frequenzen in der revidierten Frequenzreihenfolge zu synchronisieren.

2. Verfahren nach Anspruch 1, wobei das anfängliche Scannen jeder Frequenz in der Liste umfaßt, daß die Mobileinheit Signalproben in beabstandeten Intervallen auf jeder Frequenz nimmt.

3. Verfahren nach Anspruch 1 oder 2, wobei die signalcharakteristische Beurteilung umfaßt zu beurteilen, ob das Signal eine charakteristische Eigenschaft des in dem Funksystem verwendeten Funkmodulationsschemas aufweist.

4. Verfahren nach Anspruch 3, wobei die signalcharakteristische Beurteilung umfaßt zu beurteilen, ob das Signal bestimmte charakteristische Phasen- oder Frequenzverschiebungseigenschaften des Modulationsschemas des Funksystems aufweist.

5. Verfahren nach Anspruch 4, wobei der Schritt des Beurteilens, ob das Signal bestimmte charakteristische Phasen- oder Frequenzverschiebungseigenschaften des Modulationsschemas des Funksystems aufweist, umfaßt, die Phasen- oder Frequenzverschiebungen zwischen sukzessiven gewählten Proben oder Teilen in dem Signal auf der Frequenz zu analysieren und die beobachteten Phasen- oder Frequenzverschiebungen mit den erwarteten Phasen- oder Frequenzverschiebungen für das gewünschte Modulationsschema zu vergleichen.

6. Verfahren nach Anspruch 4 oder 5, umfassend die Verwendung der Abweichung der mittleren beobachteten Phasen- oder Frequenzverschiebung für das Signal, das beurteilt wird, von dem erwarteten Wert, wenn das Signal die korrekte Form der Modulation führen sollte, und/oder die Verwendung des Anteils der beobachteten Phasen- oder Frequenzverschiebungswerte mit dem Wert des gewünschten Modulationsschemas, um zu klassifizieren, wie wahrscheinlich das Signal aus dem korrekten Funksystem stammt.

7. Verfahren nach einem der vorhergehenden Ansprüche, wobei die Beurteilung, ob das gescannte Signal die bestimmte charakteristische Eigenschaft aufweist oder nicht, umfaßt, eine Wahrscheinlichkeit, daß das Signal diese charakteristische Eigenschaft aufweist, auf der Basis der Beurteilung des Signals zuzuteilen.

8. Verfahren nach einem der vorhergehenden Ansprüche, wobei die revidierte Frequenzreihenfolge so bestimmt wird, daß zuerst versucht wird, auf Frequenzen zu synchronisieren, die Signale aufweisen, die als am wahrscheinlichsten die bestimmte charakteristische Eigenschaft aufweisend beurteilt werden, und zuletzt versucht wird, auf die Signale zu synchronisieren, die am wenigsten wahrscheinlich die bestimmte charakteristische Eigenschaft aufweisen.

9. Verfahren nach Anspruch 8, wobei die revidierte Frequenzreihenfolge ferner in Signalpegelreihenfolge angeordnet wird.

10. Verfahren nach einem der vorhergehenden Ansprüche, ferner umfassend das Eliminieren von Signalen, die einen Signalpegel aufweisen, der kleiner als ein Schwellensignalpegel ist, aus der revidierten Frequenzreihenfolge.

11. Verfahren nach einem der vorhergehenden Ansprüche mit den folgenden Schritten: Während des Synchronisations-Scan, wenn die Mobilfunkeinheit versucht, sich mit jeder Frequenz zu synchronisieren und auf ein Synchronisationssignal wartet, führt die Mobilfunkeinheit eine Beurteilung aus, ob das Signal, mit dem sie sich versucht zu synchronisieren, die bestimmte charakteristische Eigenschaft des Funksystems aufweist, und unterbricht und beendet ihren Warte-und Synchronisationsversuch auf dieser Frequenz und wechselt zu der nächsten Frequenz in der Liste, wenn sie bestimmt, daß das Signal nicht die bestimmte charakteristische Eigenschaft aufweist.

12. Mobilfunkeinheit zur Verwendung in einem Mobilfunk-Kommunikationssystem, wobei in dem System mehrere Frequenzen zur Funkkommunikation verwendet werden, wobei die Mobilfunkeinheit folgendes umfaßt:
Mittel zum Speichern einer Liste von Frequenzen, die von dem Funksystem verwendet werden;
Mittel zum Scannen jeder Frequenz in der gespeicherten Liste;
Mittel zum Bestimmen des Signalpegels des Signals für jede gescannte Frequenz auf dieser Frequenz;
Mittel zum Beurteilen für jede gescannte Frequenz, ob das Signal auf dieser Frequenz eine bestimmte charakteristische Eigenschaft des Funksystems aufweist;
Mittel zum Bestimmen einer revidierten Frequenzreihenfolge auf der Basis der bestimmten Signalpegel jeder Frequenz und der Beurteilungen, ob jede Frequenz die bestimmte charakteristische Eigenschaft des Funksystems aufweist; und
Mittel zum Versuchen, mit den Frequenzen in der revidierten Frequenzreihenfolge in der Reihenfolge der revidierten Frequenzreihenfolge zu synchronisieren.

13. Mobile Einheit nach Anspruch 12, wobei die Mittel zur signalcharakteristischen Beurteilung Mittel zum Beurteilen umfassen, ob das Signal eine charakteristische Eigenschaft des in dem Funksystem verwendeten Funkmodulationsschemas aufweist.

14. Mobile Einheit nach Anspruch 13, wobei die Mittel zur signalcharakteristischen Beurteilung Mittel zum Beurteilen umfassen, ob das Signal bestimmte charakteristische Phasen- oder Frequenzverschiebungseigenschaften des Modulationsschemas des Funksystems aufweist.

15. Mobile Einheit nach Anspruch 14, umfassend Mittel zum Klassifizieren, wie wahrscheinlich das Signal aus dem korrekten Funksystem stammt, auf der Basis der Abweichung der mittleren beobachteten Phasen-oder Frequenzverschiebungen für das Signal, das beurteilt wird, von dem erwarteten Wert, wenn das Signal die korrekte Form der Modulation führen sollte, und/oder auf der Basis des Anteils gemessener Phasen- oder Frequenzverschiebungswerte, die den Wert des gewünschten Modulationsschemas aufweisen.

16. Mobile Einheit nach einem der Ansprüche 12 bis 15, wobei die Mittel zum Bestimmen der revidierten Frequenzreihenfolge dafür ausgelegt sind, die revidierte Frequenzreihenfolge so zu bestimmen, daß zuerst versucht wird, auf Frequenzen zu synchronisieren, die Signale aufweisen, die als am wahrscheinlichsten die bestimmte charakteristische Eigenschaft aufweisend beurteilt werden, und zuletzt versucht wird, auf die Signale zu synchronisieren, die am wenigsten wahrscheinlich die bestimmte charakteristische Eigenschaft aufweisen.

17. Mobile Einheit nach Anspruch 16, wobei die Mittel zum Bestimmen der revidierten Frequenzreihenfolge ferner dafür ausgelegt sind, die revidierte Frequenzreihenfolge in Signalpegelreihenfolge zu bestimmen.

18. Mobile Einheit nach einem der Ansprüche 12 bis 17, wobei die Mittel zum Bestimmen der revidierten Frequenzreihenfolge dafür ausgelegt sind, Signale, die einen Signalpegel aufweisen, der kleiner als ein Schwellensignalpegel ist, aus der revidierten Frequenzreihenfolge zu eliminieren.

19. Mobile Einheit nach einem der Ansprüche 12 bis 18, umfassend:
Mittel zum Beurteilen während des Synchronisations-Scan, wenn die Mobilfunkeinheit versucht, sich mit jeder Frequenz zu synchronisieren, während die Mobileinheit auf Synchronisationssignale wartet, ob das Signal, mit dem sie sich versucht zu synchronisieren, die bestimmte charakteristische Eigenschaft des Funksystems aufweist; und
Mittel zum Unterbrechen und Beenden des Warte- und Synchronisationsversuchs auf dieser Frequenz und zum Wechseln zu der nächsten Frequenz in der Liste, wenn bestimmt wird, daß das Signal nicht die bestimmte charakteristische Eigenschaft aufweist.

20. Computerprogrammelement mit Computersoftware-Codeteilen zum Durchführen des Verfahrens nach einem der Ansprüche 1 bis 11, wenn es auf Datenverarbeitungsmitteln installiert wird.

## Revendications

1. Procédé d'exploitation d'une unité radio mobile d'un système de radiocommunication mobile, dans lequel système radio l'unité radio mobile mémorise une liste de fréquences cibles à balayer à la recherche d'une fréquence convenable pour communiquer avec une station de base du système radio, le procédé comprenant :
les opérations par l'unité radio mobile consistant à balayer chaque fréquence dans sa liste, et déterminer pour chaque fréquence le niveau de signal du signal sur cette fréquence, et évaluer pour chaque fréquence si le signal sur cette fréquence a ou non une caractéristique particulière du système radio ;
l'opération suivante par l'unité radio mobile consistant à déterminer un ordre de fréquences revu en fonction des niveaux de signaux déterminés et des évaluations de caractéristiques pour chaque fréquence ; et
l'opération suivante par l'unité radio mobile consistant à tenter de se synchroniser sur les fréquences dans l'ordre de fréquences revu selon l'ordre de l'ordre de fréquences revu.

2. Procédé selon la revendication 1, dans lequel le balayage initial de chaque fréquence dans la liste comprend l'opération par l'unité mobile consistant à prendre des échantillons de signal à des intervalles espacés sur chaque fréquence.

3. Procédé selon la revendication 1 ou 2, dans lequel l'évaluation de caractéristique de signal comprend l'évaluation consistant à déterminer si le signal a ou non une caractéristique du plan de modulation radio utilisé dans le système radio.

4. Procédé selon la revendication 3, dans lequel l'évaluation de caractéristique de signal comprend l'évaluation consistant à déterminer si le signal présente des caractéristiques particulières de déphasage ou de décalage de fréquence du plan de modulation du système radio.

5. Procédé selon la revendication 4, dans lequel l'étape d'évaluation consistant à déterminer si le signal présente des caractéristiques particulières de déphasage ou de décalage de fréquence du plan de modulation du système radio comprend l'analyse des déphasages ou décalages de fréquence entre des échantillons ou parties sélectionnés successifs dans le signal sur la fréquence et la comparaison des déphasages ou décalages de fréquence constatés aux déphasages ou décalages de fréquence attendus pour le plan de modulation voulu.

6. Procédé selon la revendication 4 ou 5, comprenant l'utilisation de l'écart du déphasage ou décalage de fréquence moyen constaté du signal évalué par rapport à la valeur attendue si le signal portait la forme correcte de modulation et/ou l'utilisation de la proportion de valeurs de déphasage ou de décalage de fréquence constatées ayant la valeur du plan de modulation voulu, afin de classer la probabilité de provenance du signal depuis le système radio correct.

7. Procédé selon l'une quelconque des revendications précédentes, dans lequel l'évaluation consistant à déterminer si le signal balayé a ou non la caractéristique particulière comprend l'attribution d'une probabilité que le signal a cette caractéristique d'après l'évaluation du signal.

8. Procédé selon l'une quelconque des revendications précédentes, dans lequel l'ordre de fréquences revu est déterminé de telle sorte qu'une première tentative de synchronisation se fasse sur les fréquences ayant des signaux évalués comme ayant le plus probablement la caractéristique particulière, et qu'une dernière tentative de synchronisation se fasse sur les signaux évalués comme ayant le moins probablement la caractéristique particulière.

9. Procédé selon la revendication 8, dans lequel l'ordre de fréquences revu est agencé en outre dans un ordre des niveaux de signal.

10. Procédé selon l'une quelconque des revendications précédentes, comprenant en outre l'élimination depuis l'ordre de fréquences revu des signaux ayant un niveau de signal inférieur à un niveau de signal limite.

11. Procédé selon l'une quelconque des revendications précédentes, comprenant les opérations par l'unité radio mobile, consistant à : durant le balayage de synchronisation quand l'unité radio mobile tente de se synchroniser sur chaque fréquence et attend un signal de synchronisation, exécuter une évaluation consistant à déterminer si le signal sur lequel elle tente de se synchroniser a effectivement la caractéristique particulière du système radio, et à interrompre et abandonner son attente et sa tentative de synchronisation sur cette fréquence, et à commuter sur la fréquence suivante dans la liste, si elle détermine que le signal n'a pas la caractéristique particulière.

12. Unité radio mobile destinée à être utilisée dans un système de radiocommunication mobile, dans lequel système plusieurs fréquences sont utilisées pour des radiocommunications, l'unité radio mobile comprenant :
un moyen pour mémoriser une liste de fréquences utilisées par le système radio ;
un moyen pour balayer chaque fréquence dans la liste mémorisée ;
un moyen pour déterminer pour chaque fréquence balayée le niveau de signal du signal sur cette fréquence ;
un moyen pour évaluer pour chaque fréquence balayée si le signal sur cette fréquence a ou non une caractéristique particulière du système radio ;
un moyen pour déterminer un ordre de fréquences revu en fonction des niveaux de signaux déterminés de chaque fréquence et des évaluations consistant à déterminer si chaque fréquence a ou non la caractéristique particulière du système radio ; et
un moyen pour tenter de se synchroniser sur les fréquences dans l'ordre de fréquences revu selon l'ordre de l'ordre de fréquences revu.

13. Unité mobile selon la revendication 12, dans laquelle le moyen d'évaluation de caractéristique de signal comprend un moyen pour évaluer si le signal a ou non une caractéristique du plan de modulation radio utilisé dans le système radio.

14. Unité mobile selon la revendication 13, dans laquelle le moyen d'évaluation de caractéristique de signal comprend un moyen pour évaluer si le signal présente ou non des caractéristiques particulières de déphasage ou de décalage de fréquence du plan de modulation du système radio.

15. Unité mobile selon la revendication 14, comprenant un moyen pour classer la probabilité de provenance du signal depuis le système radio correct en fonction de l'écart du déphasage ou du décalage de fréquence moyen constaté du signal évalué par rapport à la valeur attendue si le signal portait la forme correcte de modulation et/ou en fonction de la proportion de valeurs de déphasage ou de décalage de fréquence mesurées ayant la valeur du plan de modulation voulu.

16. Unité mobile selon l'une quelconque des revendications 12 à 15, dans laquelle le moyen de détermination de l'ordre de fréquences revu est agencé pour déterminer l'ordre de fréquences revu de telle sorte qu'une première tentative de synchronisation se fasse sur les fréquences ayant des signaux évalués comme ayant le plus probablement la caractéristique particulière, et qu'une dernière tentative de synchronisation se fasse sur les signaux évalués comme ayant le moins probablement la caractéristique particulière.

17. Unité mobile selon la revendication 16, dans laquelle le moyen de détermination de l'ordre de fréquences revu est agencé en outre pour déterminer l'ordre de fréquences revu dans l'ordre des niveaux de signal.

18. Unité mobile selon l'une quelconque des revendications 12 à 17, dans laquelle le moyen de détermination de l'ordre de fréquences revu est agencé pour éliminer depuis l'ordre de fréquences revu les signaux ayant un niveau de signal inférieur à un niveau de signal limite.

19. Unité mobile selon l'une quelconque des revendications 12 à 18, comprenant :
un moyen pour, durant le balayage de synchronisation quand l'unité radio mobile tente de se synchroniser sur chaque fréquence, pendant que l'unité mobile attend des signaux de synchronisation, évaluer si le signal sur lequel elle tente de se synchroniser a effectivement la caractéristique particulière du système radio ; et
un moyen pour interrompre et abandonner l'attente et la tentative de synchronisation sur cette fréquence, et pour commuter sur la fréquence suivante dans la liste, s'il est déterminé que le signal n'a pas la caractéristique particulière.

20. Elément de programme informatique comprenant des parties de code logiciel informatique pour exécuter le procédé selon l'une quelconque des revendications 1 à 11, quand il est installé sur un moyen de traitement de données.
